# FASCICULE DE BREVET EUROPEEN

(11) **EP 3 497 183 B1**
(45) Date de publication et mention de la délivrance du brevet: **08.03.2023**
(21) Numéro de dépôt: 17729381.8
(22) Date de dépôt: 16.05.2017
(51) Int. Cl.: C09K 21/14, A62C 3/16, E04B 1/94, F16L 5/04

(54) **PIECE SOUPLE A PROPRIETES COUPE-FEU**
FLEXIBLES TEIL MIT BRANDSCHUTZEIGENSCHAFTEN
FLEXIBLE PART WITH FIRE PROTECTION PROPERTIES

(30) Priorité: 17.05.2016 EP 16170019
(43) Date de publication de la demande: 19.06.2019
(73) Titulaire: Compart, 30340 Salindres (FR)
(72) Inventeur: SAUTTREAU, Jean, 30140 Bagard (FR); ORTEGA, Esteban, 26000 Valence (FR)
(74) Mandataire: Delaveau, Sophie
(86) Numéro de dépôt international: PCT/EP2017/061761
(87) Numéro de publication internationale: WO 2017/198677

(56) Documents cités:
- WO-A1-03/064801
- US-A- 4 424 867
- US-A1- 2008 290 094
- US-B1- 6 173 100

## Description

L'invention concerne une pièce souple présentant des propriétés coupe-feu.

L'invention s'inscrit dans le domaine de la protection d'éléments structurels ou électriques contre l'élévation excessive de température et la propagation de la chaleur lors d'un incendie. Ces éléments peuvent être des poutres, des tuyaux, des câbles, des câbles électriques ou tout autre élément mécanique, structurel ou électrique nécessitant une protection particulière lors d'un incendie.

L'invention s'inscrit plus particulièrement dans la protection des câbles électriques qui s'étendent dans des chemins de câbles.

Il est connu d'utiliser des fibres céramiques réfractaires pour protéger de telles installations. Mais l'utilisation seule de ces fibres s'avère insuffisante pour retarder efficacement la propagation de la chaleur jusqu'à l'élément à protéger. Par ailleurs, ces fibres présentent des risques toxicologiques élevés lorsqu'elles sont dispersées, inhalées ou ingérées.

Les publications EP 612 540 et EP 820 326 décrivent des dispositifs souples à propriétés coupe-feu destinés notamment protéger des câbles lors d'un incendie. Ces dispositifs sont faits de plusieurs nappes de fibres isolantes qui entourent le chemin de câbles et qui sont assemblées par superposition entre elles par une colle réfractaire.

L'installation de ces dispositifs implique la mise en place d'une première nappe, la réalisation d'un premier encollage, l'installation d'une seconde nappe, etc ... jusqu'à l'obtention de l'épaisseur de protection souhaitée.

La publication US6173100 divulgue un câble renfermant un support de transmission 56 (fibre optique 58), lequel support de transmission est entouré par un ruban, lui-même entouré d'une gaine plastique, le ruban comportant des couches de tissues, chargées ou imprégnées de polymères superabsorbants. La publication WO03064801 divulgue un joint intumescent comportant une gaine thermoplastique, un treillis de renforcement et un mélange intumescent.

Ces dispositifs présentent de nombreuses contraintes et inconvénients. En premier lieu, ces installations nécessitent l'intervention d'un personnel qualifié pour positionner les nappes de fibres et réaliser le ou les encollages. Par ailleurs, une fois le dispositif monté, il n'est plus possible de le démonter pour le réutiliser sur un autre chemin de câbles ou en cas de maintenance. En outre, l'installation de ces dispositifs engendre la manipulation des nappes de fibres, ce qui présente les risques toxicologiques précédemment expliqués. Enfin, l'utilisation de colles réfractaires provoque la rigidification du dispositif qui ne peut alors pas s'adapter aux déformations des installations pouvant survenir lors de l'augmentation de température.

Dans ce contexte, la présente invention vise une pièce souple à propriétés coupe-feu permettant de pallier aux inconvénients précités.

À cet effet, la pièce souple de l'invention à propriétés coupe-feu pour protéger tout élément mécanique, structurel ou électrique d'une élévation excessive de la température, est essentiellement caractérisée en ce qu'elle comporte au moins :
- une nappe d'éléments fibreux inorganiques et isolants présentant la forme d'une pièce pleine sensiblement plane dans son état déployé,
- un gel aqueux disposé à proximité immédiate de la dite nappe comprenant au moins un polymère super-absorbant tel que des polyacrylamides et des polyamides, et comprenant au moins 80% en poids d'eau,
- et une enveloppe étanche qui isole au moins le gel aqueux (4) de l'environnement,
de sorte que lors d'une exposition à des températures excessives, le gel aqueux se trouve au moins partiellement imprégné dans la nappe de fibres pour en retarder son élévation de température.

On entend par « proximité immédiate » une disposition dans laquelle selon un premier mode de réalisation la nappe de fibres est enduite et imprégnée du gel aqueux, ou selon un second mode de réalisation le gel aqueux étanchéifié est en contact surfacique avec la nappe de fibres.

L'imprégnation d'un gel aqueux dans la nappe de fibres lors d'une élévation de température présente de nombreux avantages. En premier lieu, la présence de molécules d'eau à proximité immédiate des fibres permet de retarder l'élévation de température des fibres puisque l'évaporation des molécules d'eau est une réaction de type endothermique qui est donc génératrice d'absorption d'énergie. La nappe gélifiée présente ainsi des performances améliorées de protection vis-à-vis du feu.

En outre, les molécules d'eau incorporées ne sont pas libres mais appartiennent à une structure de type gel. Il en résulte également que lors d'une élévation de température, les cycles d'évaporation et de condensation à proximité des fibres sont nombreux et retardent plus encore la propagation de la chaleur.

Enfin, les fibres étant imprégnées de gel, elles ne sont plus directement exposées à l'air ce qui limite les risques toxicologiques.

La pièce souple de l'invention peut également comporter les caractéristiques optionnelles suivantes considérées isolément ou selon toutes les combinaisons techniques possibles :
- selon une première variante, la nappe de fibres est au moins partiellement enduite et au moins partiellement imprégnée du gel aqueux, formant ainsi une nappe gélifiée,
- dans ce cas, l'enveloppe étanche peut entourer la nappe gélifiée en l'isolant de l'environnement,
- l'enveloppe étanche est un film polymère étanche qui entoure l'ensemble formé par la ou les nappes et le gel aqueux.
- selon une deuxième variante, la pièce souple comporte au moins le gel aqueux contenu dans un film polymère étanche, l'ensemble formé par le gel aqueux ainsi entouré du film étanche étant en contact surfacique avec au moins une nappe de fibres.
- le gel aqueux et la ou les nappes de fibres sont logés dans une enveloppe isolante thermiquement pouvant former l'étanchéité attendue du gel aqueux à la place ou en plus du film polymère étanche.
- l'enveloppe isolante est réalisée à base de tissu de verre enduit de silicone sur au moins l'une de ses faces en formant enveloppe étanche, et comprend une nappe supérieure et une nappe inférieure (9) solidarisées entre elles au niveau de leurs bords périphériques en regard respectifs.
- le gel aqueux est réalisé à base d'un ou de plusieurs polymères rétenteurs d'eau.
- le gel aqueux est réalisé à base d'un ou de plusieurs polymères super absorbants.
- le gel aqueux est à base de polyacrylamide.
- le gel aqueux comporte en outre un ou plusieurs additifs choisis parmi des composés à décomposition endothermiques tel que le trihydroxyde d'aluminium, des retardateurs de flammes, des agents ignifugeants, des agents de charbonnement physique et des produits intumescents.
- les éléments fibreux sont à base de fibres céramiques réfractaires.
- les fibres céramiques réfractaires sont des fibres de silicates alcalino-terreux.
- l'enveloppe est ajustée aux dimensions de la nappe gélifiée.
- l'enveloppe isolante comporte au moins une première bande d'attache positive qui s'étend le long d'un bord périphérique d'une première nappe supérieure ou inférieure, et au moins une première bande d'attache négative qui s'étend le long du bord périphérique opposé de la seconde nappe inférieure ou supérieure.
- l'enveloppe isolante comporte une seconde bande d'attache positive qui s'étend sur la première nappe le long du bord périphérique adjacent au bord comportant la première bande d'attache positive, et une seconde bande d'attache négative qui s'étend sur la seconde nappe le long du bord périphérique adjacent au bord comportant la première bande d'attache négative.
- les bandes d'attaches positives et négatives sont des bandes velcro respectivement crochet et velours.

L'invention porte enfin sur l'utilisation de la pièce souple telle que précédemment décrite pour la protection de chemins de câbles électriques.

D'autres caractéristiques et avantages de l'invention ressortiront clairement de la description qui en est donnée ci-dessous, à titre indicatif et nullement limitatif, en référence aux figures annexées parmi lesquelles :
- la figure 1 est une représentation schématique en coupe d'une partie de la pièce souple de l'invention faite d'une nappe gélifiée partiellement imprégnée de gel aqueux selon une première variante du premier mode de réalisation de l'invention,
- la figure 2 est une représentation schématique en coupe d'une partie de la pièce souple de l'invention faite d'une nappe gélifiée totalement imprégnée de gel aqueux selon une seconde variante du premier mode de réalisation de l'invention,
- la figure 3 est une représentation schématique en coupe de la pièce souple de l'invention faite d'une nappe gélifiée entourée d'un film polymère étanche selon le premier mode de réalisation,
- la figure 3A est une représentation schématique en coupe de la pièce souple de l'invention faite d'une nappe gélifiée entourée d'un film polymère étanche selon une première variante du second mode de réalisation,
- la figure 3B est une représentation schématique en coupe de la pièce souple de l'invention faite d'une nappe gélifiée entourée d'un film polymère étanche selon une deuxième variante du second mode de réalisation,
- la figure 3C est une représentation schématique en coupe de la pièce souple de l'invention faite d'une nappe gélifiée entourée d'un film polymère étanche selon une troisième variante du second mode de réalisation,
- la figure 4 est une représentation schématique de dessus de l'insertion de la pièce souple de la figure 3 dans une enveloppe isolante,
- la figure 5 est une représentation de dessus de l'enveloppe isolante dans laquelle est logée la pièce souple de la figure 3,
- la figure 6 est une vue en coupe de la pièce souple de la figure 3 logée dans l'enveloppe isolante selon la ligne VI-VI de la figure 5,
- la figure 7 est une vue de coté d'une pièce souple de l'invention incluant l'enveloppe isolante qui est montée autour d'un chemin de câbles,
- la figure 8 est une vue de coté de deux pièces souples de l'invention qui sont montées en bout à bout autour d'un chemin de câbles,
- la figure 9 est une vue en coupe de la pièce souple de l'invention autour d'un chemin de câbles selon la ligne IX-IX de la figure 8,
- la figure 10 est une vue en coupe de deux pièces souples de l'invention qui sont montées superposées autour d'un chemin de câbles, et
- la figure 11 est un graphique comparant l'évolution de la température dans une plaque de béton cellulaire soumise au feu et protégée par une nappe de fibres de l'art antérieur et par la pièce souple de l'invention ici n'incluant pas d'enveloppe étanche.

L'invention consiste principalement à préserver une quantité d'eau maximum dans ou à proximité immédiate d'une nappe isolante de façon que lors d'une exposition au feu ou à des hautes températures, cette quantité d'eau disponible retarde l'élévation de température des fibres constituant la nappe isolante. Pour préserver une quantité d'eau maximum, il s'agit d'une part d'utiliser un gel aqueux, et d'autre part d'isoler ce gel aqueux de l'environnement pour éviter l'évaporation de l'eau avant le déclenchement du sinistre.

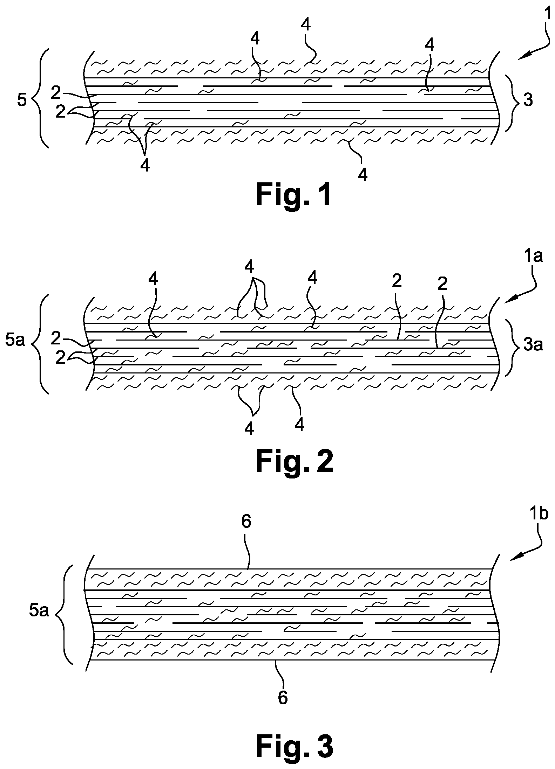

En référence à la figure 1, la pièce souple de l'invention 1 d'un premier mode de réalisation et selon une première variante de réalisation comporte un réseau de fibres inorganiques et isolantes 2 constituant une nappe de fibres 3 qui est recouverte ou enduite de gel aqueux 4. Dans ce mode de réalisation, la nappe de fibres 3 est partiellement imprégnée dudit gel aqueux 4 en formant une nappe gélifiée 5.

En référence à la figure 2, la pièce souple de l'invention 1a selon une seconde variante est identique à celle de la figure 1, sauf en ce que la nappe de fibres 3a est totalement imprégnée dans son épaisseur par le gel aqueux 4 en formant une nappe gélifiée 5a.

Les fibres inorganiques et isolantes sont de préférence biosolubles pour limiter les risques toxicologiques lors de leur manipulation. Ces fibres constituent de façon connue un isolant thermique résistant à des hautes températures. Les fibres inorganiques et isolantes sont choisies parmi tout matériau fibreux ou ouaté isolant sec, par exemple la laine de roche, la laine de verre ou des fibres céramiques réfractaires telles que les fibres de silicates alcalino-terreux.

Les fibres peuvent être libres, organisées ou non, tissées ou organisées sous forme d'une nappe 3 comme représenté sur la figure 1. L'épaisseur de la nappe 3 est de l'ordre de quelques millimètres jusqu'à environ 4 centimètres. Dans le cadre de l'invention, on entend par « nappe » une pièce pleine sensiblement plane dans son état déployé.

Le gel aqueux 4 permettant la rétention de molécules d'eau à la surface autour et au sein de la nappes de fibres 3, est réalisé à base de polymères aptes à absorber et retenir des molécules d'eau, étant rappelé que l'objectif principal de l'invention est de retenir un maximum d'eau liquide dans la pièce de l'invention À titre d'exemple, on utilise de l'alcool polyvinylique (PVAL), du poly(oxyde d'éthylène) (POE) ou encore des polymères super-absorbants (SAP) tels que les polyacrylates et les polyamides, connus pour la rétention de liquide dans des domaines variés tels que les couches pour bébés ou l'irrigation des cultures. On pourra utiliser un mélange de plusieurs des polymères précités.

Le gel aqueux 4 peut comporter en outre un ou plusieurs additifs, notamment des retardateurs de flammes à décomposition endothermique tels que du trihydroxyde d'aluminium (ATH), du dihydroxyde de magnésium, du borate de zinc, des agents de charbonnement physiques tels que du graphite, du mica, de la vermiculite, ou encore des agents ignifugeants, et tout autre produit intumescents.

La nappe gélifiée 5 du premier mode de réalisation est réalisée de la façon suivante : le gel aqueux 4 est préalablement préparé par mise en contact de granules d'un polymère super absorbant à base de polyacrylamide, avec de l'eau, et le cas échéant les additifs précités. La nappe de fibres 3 est ensuite enduite par le gel aqueux 4 qui migre dans l'épaisseur de la dite nappe de fibres 3. Alternativement, le gel aqueux 4 est versé sur les deux faces de la nappe de fibres 3.

La taille des granules de polymère superabsorbant peut varier entre 0,5 et 4 millimètres. En effet, si l'on souhaite, comme représenté sur la figure 1, que le gel aqueux 4 ne migre que partiellement dans l'épaisseur de la nappe de fibres 3, on utilise des granules de petites tailles, entre 0,5 et 1 millimètres par exemple, de sorte que la prise du gel aqueux 4 s'effectue avant de plonger la nappe de fibres 3 dans le gel aqueux 4, le gel aqueux 4 ne migrant, en raison de sa viscosité, que partiellement dans la nappe de fibres 3.

Si l'on souhaite, comme représenté en figure 2, que le gel aqueux 4 migre dans toute l'épaisseur de la nappe de fibres 3a, on utilise des granules de plus grande taille, par exemple supérieure à 1 millimètres, et on plonge la nappe de fibres 3 dans le gel aqueux 4 avant que la gélification de ce dernier ne soit achevée. De cette façon, le gel aqueux 4 n'ayant pas encore totalement pris est suffisamment liquide pour imprégner la nappe de fibres 3a dans toute son épaisseur, tout en poursuivant son processus de gélification au sein des fibres 2. On contrôle ainsi le taux d'imprégnation de la nappe de fibres 3,3a par le gel aqueux.

La nappe gélifiée 5,5a en résultant est ainsi enduite de gel aqueux 4 et au moins partiellement imprégnée dudit gel aqueux 4. En restant dans le cadre de l'invention, le film de gel aqueux 4 formé à la surface de la nappe de fibres 3,3a peut être localement absent sur certaines parties de la nappe de fibres 3,3a, c'est pourquoi on considère que la nappe de fibres 3,3a est au moins partiellement enduite du gel aqueux 4.

On décrit dans les exemples 1 et 2 ci-dessous des exemples non limitatifs de réalisation du gel aqueux.

### Exemple 1 :

Le gel aqueux est réalisé par mélange de 1% en poids en polyacrylamide, de 15% de trihydroxyde d'aluminium et de 84% en poids d'eau.

### Exemple 2 :

Le gel aqueux est réalisé par mélange de 1% en poids en polyacrylamide, de 10% de trihydroxyde d'aluminium et de 89% en poids d'eau.

La fonctionnalité du gel aqueux 4 est d'assurer la présence d'eau lors d'une éventuellement exposition des éléments à protéger au feu ou à des hautes températures. Pour ce faire, le gel aqueux comporte une large teneur en eau, de préférence plus de 50% en poids d'eau et plus préférentiellement plus de 80% en poids d'eau (voir les exemples 1 et 2 ci-dessous). En outre, le ou les polymères formant rétenteurs d'eau et participant à la formation du gel sont saturés en eau liquide. L'utilisation du gel aqueux 4 comme véhicule de molécules d'eau au sein de la nappe de fibres 3,3a permet d'éviter, ou à tout le moins de limiter, l'évaporation des molécules d'eau.

En outre, selon l'invention, il est indispensable d'éviter que l'eau contenu dans le gel aqueux 4 n'interagisse avec l'air de l'environnement et ne s'évapore. Pour ce faire, le gel aqueux 4 doit être entouré d'une couche étanche. On entend par couche étanche une couche de matériau permettant d'éviter ou à tout le moins de limiter les phénomènes d'évaporation liés aux échanges avec l'air environnant.

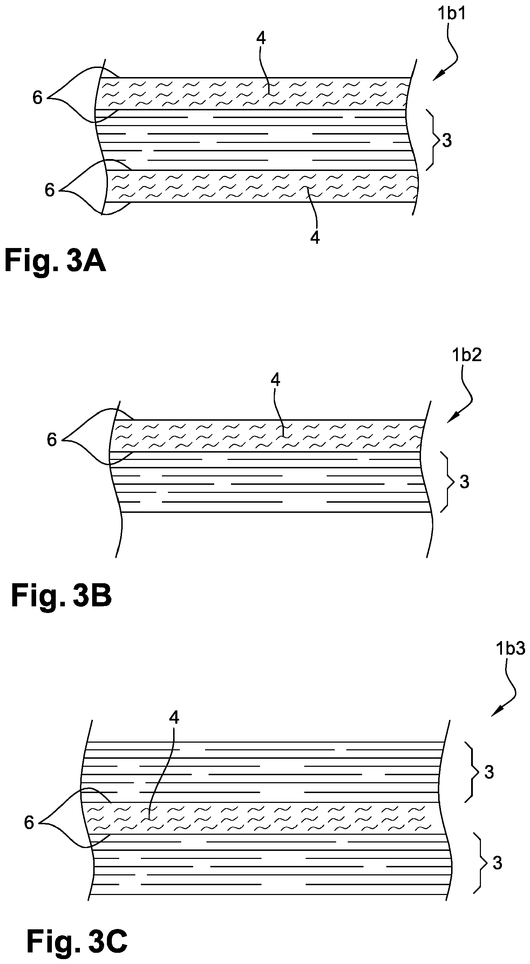

Sur la figure 3 et selon le premier mode de réalisation de l'invention dans lequel, comme décrit en référence aux figures 1 et 2, la nappe de fibres 3a est imprégnée dans son épaisseur par le gel aqueux 4 en formant une nappe gélifiée 5a, ladite nappe gélifiée 5a est entourée d'un film polymère étanche 6, par exemple un film polymère à base de polyéthylène. Bien entendu, L'utilisation de ce film étanche 6 s'applique autant à la nappe gélifiée 5 partiellement imprégnée de la figure 1 qu'à la nappe gélifiée 5a totalement imprégnée de la figure 2.

On se réfère aux figures 3A,3B,3C pour décrire trois variantes d'une seconde mode de réalisation dans lesquelles le gel aqueux 4, avant exposition au sinistre, n'est pas imprégné dans la nappe de fibres 3. Sur la figure 3A, la pièce souple 1b1 comporte une couche supérieure de gel aqueux 4 entourée d'un film étanche 6, une couche inférieure de gel aqueux 4 entourée d'un film étanche 6, et la nappe de fibres 3 disposée entre les couches supérieure et inférieure de gel aqueux ainsi étanchéifiées. Sur la figure 3B, la pièce souple 1b2 comporte une couche supérieure de gel aqueux 4 entouré d'un film étanche 6, cette couche de gel aqueux ainsi étanchéifiée étant posée sur la face supérieure de la nappe de fibres 3. Sur la figure 3C, la pièce souple 1b3 comporte une couche de gel aqueux 4 entourée d'un film étanche 6, cette couche de gel aqueux ainsi étanchéifiée étant disposée en sandwich entre deux nappes de fibres 3 supérieure et inférieure. Dans ces variantes et ce second mode de réalisation, le gel aqueux 4, le film étanche 6 et la nappe de fibres 3 sont ceux précédemment décrits en référence aux figures 1, 2 et 3.

Dans le second mode de réalisation, la nappe de fibres 3 n'est pas imprégnée par le gel aqueux 4 tant que la pièce souple 1b1, 1b2,1b3 n'est pas soumise à des hautes températures. Lorsque la pièce souple 1b1, 1b2, 1b3 est exposée à un sinistre engendrant une hausse substantielle de la température environnante, le film polymère étanche 6 fond lorsque la température environnante dépasse sa température de fusion, et le gel aqueux 4 est alors libéré et pénètre dans l'épaisseur de la nappe de fibres 3 en l'imprégnant au moins partiellement. Cette imprégnation va alors, comme dans le cas de la pièce souple du premier mode de réalisation, retarder l'élévation de température des fibres constituant la nappe isolante.

Ainsi, que l'on se trouve dans le premier mode de réalisation où le gel aqueux 4 imprègne la nappe de fibres 3 dès la réalisation de la pièce souple 1b ou dans le mode de réalisation des figures 3A,3B,3C où le gel aqueux 4 étanchéifié est apposé sur la nappe de fibres 3, la nappe de fibres 3 se trouvera imprégnée au moins partiellement par le gel aqueux 4 au moment d'une élévation de température de l'environnement et ce, afin de retarder son élévation de température.

En outre, comme décrit en référence aux figures 3, 3A, 3B,3C, il est indispensable que le gel aqueux 4 soit isolé de façon étanche de l'environnement au sein de la pièce souple 1b,1b1, 1b2, 1b3. Plusieurs configurations d'étanchéité sont possibles. Soit le film étanche 6 recouvre l'ensemble formé par le gel aqueux 4 et la nappes de fibres 3 (ce type d'étanchéité est nécessaire pour le premier mode de réalisation ou le gel aqueux est imprégné dans la nappe de fibres), soit le gel aqueux 4 est lui-même contenu dans un film étanche. Il est par ailleurs possible, bien que non représenté, de combiner ces deux configurations afin d'augmenter le caractère étanche de la pièce souple. Il est en tout état de cause indispensable d'isoler de façon étanche au moins le gel aqueux des éléments à protéger pour éviter son évaporation avant exposition aux hautes températures.

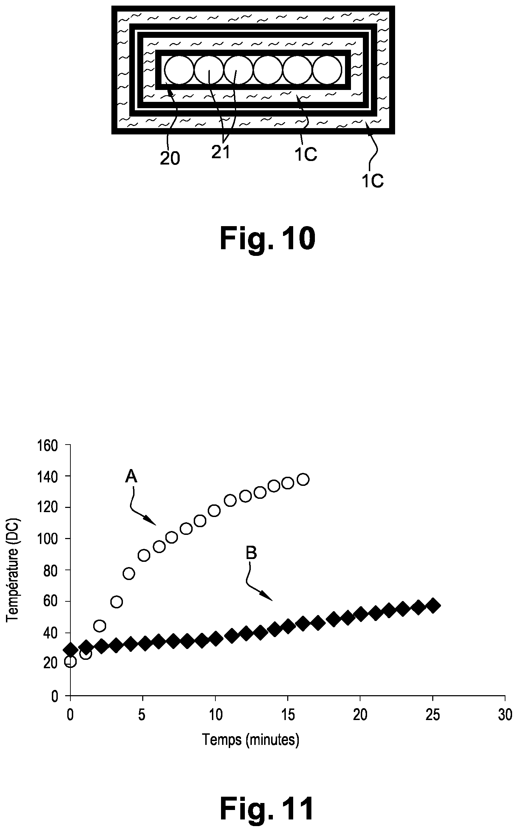

On se réfère à la figure 11 qui compare des résultats de montée en température dans une plaque de béton lorsque celle-ci est protégée par un système de l'art antérieur et par la pièce souple de l'invention de la figure 1.

Pour réaliser ces tests, une plaque de béton cellulaire est fixée mécaniquement au niveau de l'une de ses faces avec d'une part une nappe de laine de silicates alcalino-terreux, et d'autre part avec une nappe gélifiée 5 selon la première variante.

On mesure la température au sein de la plaque de béton au moyen d'un thermocouple. La mesure de température est prise à l'interface entre la nappe de laine ou la nappe gélifiée 5, et la plaque de béton. La nappe de laine ou la nappe gélifiée est ensuite enflammée. On suit alors l'évolution de la température à l'interface entre la nappe de laine ou la nappe gélifiée, et la plaque de béton.

La courbe A illustre les résultats obtenus lorsque la nappe utilisée est la nappe de laine de l'art antérieur. On constate une montée en température rapide, dès les premières minutes, atteignant 140°C au bout de 15 minutes d'exposition aux flammes.

La courbe B illustre les résultats obtenus lorsque la nappe utilisée est la nappe gélifiée 5 de l'invention. On constate une montée en température très faible, la température à l'interface atteignant un peu moins de 60 °C au bout de 25 minutes.

Ces résultats illustrent l'augmentation substantielle de la tenue au feu d'une installation protégée par la pièce souple de l'invention. Bien entendu, ces tests ayant été effectués peu de temps après la réalisation de la nappe gélifiée, la présence d'un film étanche n'était pas nécessaire. Un film ou plus généralement une couche étanche s'avère nécessaire lorsque la nappe est installée sur site et destinée à rester en place sur une durée plus ou moins longue.

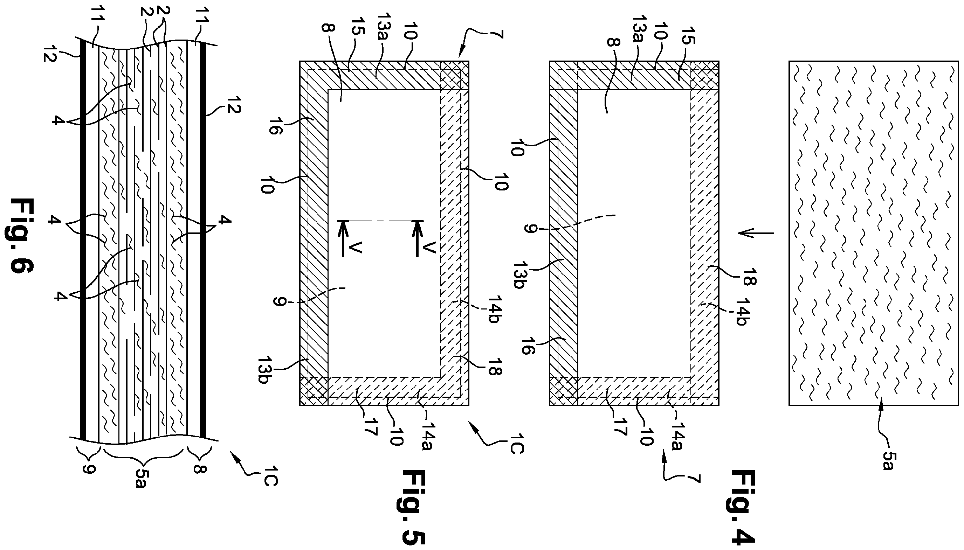

En référence à la figure 4, selon une quatrième variante, la nappe gélifiée 5a est logée dans une enveloppe isolante thermiquement 7. La nappe gélifiée peut être celle de la figure 1, de la figure 2 ou de la figure 3.

L'enveloppe isolante 7 comporte une nappe supérieure 8 et une nappe inférieure 9 de même dimension, réalisées à base d'un tissu de verre enduit sur sa face supérieure en contact avec le milieu environnant par du silicone formant une couche étanche, et assemblées ensemble par exemple par des coutures 10 situées au niveau de leurs bords périphériques en regard. La dénomination « supérieure » et « inférieure » des nappes 8,9 est utilisée dans un souci descriptif mais peut bien évidemment être inversée, l'enveloppe 7 pouvant s'utiliser dans les deux sens. Si l'enveloppe isolante 7 est parfaitement étanche (notamment au niveau de ses coutures 10), cette enveloppe 7 peut remplacer le film étanche 6 de la figure 3 lorsque la nappe utilisée est celle des figures 1 ou 2, en formant la couche d'isolation étanche indispensable pour préserver la présence de l'eau dans le gel 4. Bien entendu, l'utilisation de la nappe gélifiée 5a préalablement entourée du film étanche 6 (figure 3) et introduite dans l'enveloppe isolante 7 viendra accroitre plus encore la préservation de l'eau dans le gel 4.

L'enveloppe isolante 7 est ajustée aux dimensions de la nappe gélifiée 5 de façon qu'une fois la nappe gélifiée 5 logée dans l'enveloppe 7 entre les nappes supérieure 8 et inférieure 9, toute la surface de l'enveloppe isolante 7 est faite d'une juxtaposition de nappe supérieure 8, de nappe gélifiée 5a et de nappe inférieure 9 (figure 6).

L'insertion de la nappe gélifiée 5a s'effectue au niveau d'un bord de l'enveloppe isolante 7 dénué dans un premier temps de la couture 10. Une fois la nappe gélifiée 5a insérée dans l'enveloppe isolante 7, la dernière couture 10 est réalisée et on obtient une pièce souple 1c selon une quatrième variante.

En référence à la figure 6, cette pièce souple 1c présente en coupe la nappe gélifiée 5a prise en sandwich entre la nappe supérieure 8 faite de tissu de verre 10 enduit de silicone 11 et la nappe inférieure 9 également faite de tissu de verre 10 enduit de silicone 11.

L'utilisation de l'enveloppe isolante 7 dans laquelle est logée la nappe gélifiée 5a présente l'avantage d'augmenter la protection au feu de par la présence de tissu de verre 11 et de silicone 12, d'assurer l'étanchéité de la nappe gélifiée 5a en évitant l'évaporation de l'eau emprisonnée dans les fibres 2, de limiter plus encore les risques toxicologiques liés à l'emploi de fibres et de faciliter le stockage et le transport de la pièce souple 1c.

En outre, on prévoit sur l'enveloppe isolante 7 des moyens d'attaches pour faciliter le positionnement de la pièce souple 1c sur l'installation à protéger, par exemple un chemin de câbles.

En référence aux figures 4 et 5, ces moyens d'attache comportent des bandes velcro 13a,13b,14a,14b s'étendant le long des bords périphériques de l'enveloppe isolante 7 selon la disposition suivante : une bande velcro positive ou autrement dénommée « crochet » 13a est solidarisée, par exemple par collage, le long d'un bord périphérique 15 de la nappe supérieure 8 et une bande velcro négative ou autrement dénommée « velours » 14a est solidarisée, par exemple par collage, le long du bord périphérique opposé 17 de la nappe inférieure 9.

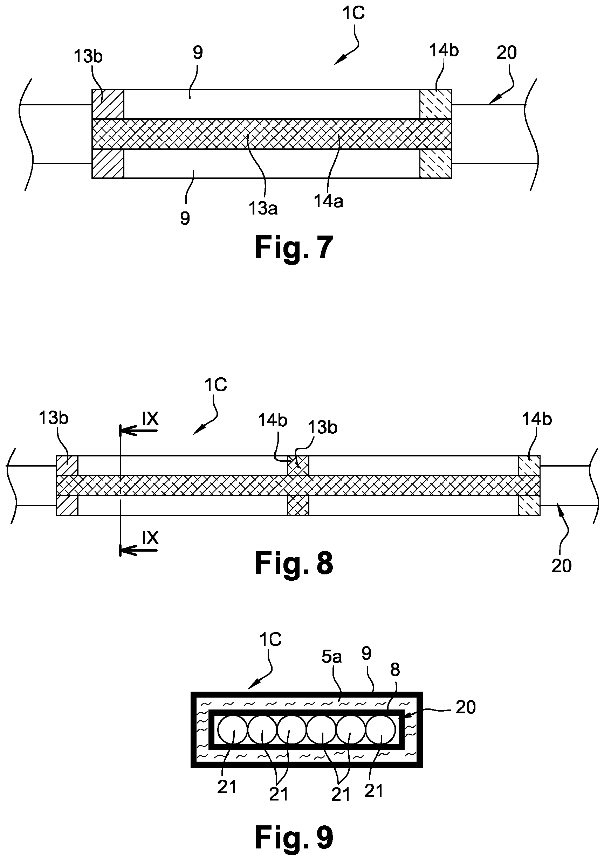

Ces deux bandes velcro 13a, 14a permettent d'assurer la mise en place et la fixation facile et rapide de la pièce souple 1c autour d'un chemin de câbles 20 comme représenté sur la figure 7. En effet, il suffit de positionner la pièce souple 1c autour du chemin de câbles 20 et d'amener la bande velcro positive 13a en appui de contact sur la bande velcro négative 14a. La pièce souple 1c assure alors sa fonction de protection anti-feu.

Pour permettre la mise en place en bout à bout de plusieurs pièces souples 1c telle qu'illustré sur la figure 8, on prévoit en outre deux autres bandes velcro. En référence aux figures 4 et 5, on prévoit ainsi une seconde bande velcro positive 13b solidarisée sur la nappe supérieure 8 le long du bord périphérique adjacent 16 au bord périphérique 15 comportant la première bande velcro 13a, et une seconde bande velcro négative 14b solidarisée sur la nappe inférieure 9 le long du bord périphérique adjacent 18 au bord périphérique 17 comportant la première bande velcro 14a.

On retrouve sur la figure 7 les secondes bandes velcro positive 13b et négative 14b aux extrémités longitudinales de la pièce souple 1c.

En référence à la figure 8, deux pièces souples 1c sont assemblées en bout à bout le long et autour du chemin de câbles 20 et sont solidarisées ensemble par appui de contact de la seconde bande velcro négative 14b d'une première pièce souple 1c sur la seconde bande velcro positive 13b de la pièce souple adjacente 1c.

L'enveloppe 7 munie des bandes velcro ne nécessite pas de personnel qualifié pour la mise en place de la ou des pièces souple 1c sur l'installation à protéger, en l'occurrence le chemin de câbles.

L'enveloppe 7 est ici décrite renfermant la nappe gélifiée 5, mais l'enveloppe 7 peut également être utilisée en renfermant une nappe de fibres de l'art antérieur dénuée de gel aqueux.

En référence à la figure 9, les câbles 21 qui s'étendent dans le chemin de câbles 20 sont ainsi entourés de la pièce souple 1c de l'invention faite de la nappe supérieure 8 de l'enveloppe isolante, de la nappe gélifiée 5a et de la nappe inférieure 9 de l'enveloppe isolante. Par souci de clarté, les bandes velcro ne sont pas représentées sur cette figure. La nappe gélifiée peut naturellement être celle de la figure 1 et être entourée ou pas du film étanche 6 illustré sur la figure 3.

En référence à la figure 10, pour augmenter plus encore les performances au feu, on peut superposer deux pièces souples 1c l'une sur l'autre autour du chemin de câbles 20.

La pièce souple 1c comportant la nappe gélifiée logée dans l'enveloppe isolante 7 munie des bandes velcro peut être facilement manipulée, montée autour d'un chemin de câbles et réutilisée, par exemple lors d'opérations de maintenance ou de retirage des câbles électriques. Sa manipulation ne nécessite l'intervention d'aucun personnel qualifié. En outre, les risques toxicologiques liés à la présence des fibres céramiques sont tout à fait limités du fait de la présence conjointe du gel aqueux et de de l'enveloppe. Enfin, les performances au feu du fait de l'imprégnation de la nappe de fibres dans le gel aqueux sont nettement améliorées.

L'utilisation de la pièce souple 1,1a,1b,1c de l'invention ne se limite pas à la protection des câbles électriques mais peut également trouver application pour d'autres objets ou installations nécessitant une protection anti-feu, par exemple tous types d'éléments mécaniques tel que des tuyauteries, des vannes, des gaines, des armoires électriques ou tous types d'éléments structurels.

## Revendications

1. Pièce souple à propriétés coupe-feu, **caractérisée en ce qu'**elle comporte au moins :
- une nappe (3,3a) d'éléments fibreux inorganiques et isolants (2) présentant la forme d'une pièce pleine sensiblement plane dans son état déployé,
- un gel aqueux (4) disposé à proximité immédiate de la dite nappe (3) comprenant au moins un polymère super-absorbant tel que des polyacrylamides et des polyamides, et comprenant au moins 80% en poids d'eau,
- et une enveloppe étanche (6,7) qui isole au moins le gel aqueux (4) de l'environnement,
de sorte que lors d'une exposition à des températures excessives, le gel aqueux (4) se trouve au moins partiellement imprégné dans la nappe de fibres (3) pour en retarder son élévation de température.

2. Pièce souple selon la revendication 1, **caractérisé en ce que** la nappe de fibres ('3) est au moins partiellement enduite et au moins partiellement imprégnée du gel aqueux (4), formant ainsi une nappe gélifiée (5,5a),

3. Pièce souple selon la revendication 2, **caractérisée en ce que** l'enveloppe étanche (6,7) entoure la nappe gélifiée (5,5a)

4. Pièce souple selon l'une quelconque des revendications 1 à 3, **caractérisée en ce que** l'enveloppe étanche est un film polymère étanche (6) qui entoure l'ensemble formé par la ou les nappes (3,3a) et le gel aqueux (4).

5. Pièce souple selon la revendication 1, **caractérisée en ce qu'**elle comporte au moins le gel aqueux (4) contenu dans un film polymère étanche (6), l'ensemble formé par le gel aqueux (4) ainsi entouré du film étanche (6) étant en contact surfacique avec au moins une nappe de fibres (3).

6. Pièce souple selon l'une quelconque des revendications précédentes, **caractérisée en ce que** le gel aqueux (4) et la ou les nappes de fibres (3) sont logés dans une enveloppe isolante thermiquement (7).

7. Pièce souple selon la revendication 6, **caractérisée en ce que** l'enveloppe isolante (7) est réalisée à base de tissu de verre (11) enduit de silicone (12) sur au moins l'une de ses faces en formant enveloppe étanche, et comprend une nappe supérieure (8) et une nappe inférieure (9) solidarisées entre elles au niveau de leurs bords périphériques en regard respectifs.

8. Pièce souple selon l'une quelconque des revendications précédentes, **caractérisée en ce que** le gel aqueux (4) est réalisé à base d'un ou de plusieurs polymères rétenteurs d'eau.

9. Pièce souple selon la revendication 8, **caractérisée en ce que** le gel aqueux (4) est réalisé à base d'un ou de plusieurs polymères super absorbants.

10. Pièce souple selon la revendication 8, **caractérisée en ce que** le gel aqueux (4) est à base de polyacrylamide.

11. Pièce souple selon l'une quelconque des revendications précédentes, caractérisé en ce les éléments fibreux (2) sont à base de fibres céramiques réfractaires.

12. Pièce souple selon la revendication 11, **caractérisée en ce que** les fibres céramiques réfractaires sont des fibres de silicates alcalino-terreux.

13. Pièce souple selon l'une quelconque des revendications 6 à 12, **caractérisée en ce que** l'enveloppe isolante (7) comporte au moins une première bande d'attache positive autrement dénommée « crochet » (13a) qui s'étend le long d'un bord périphérique (15) d'une première nappe supérieure (8) ou inférieure (9), et au moins une première bande d'attache négative autrement dénommée « velours » (14a) qui s'étend le long du bord périphérique opposé (17) de la seconde nappe inférieure (9) ou supérieure (8).

14. Pièce souple selon la revendication 15, **caractérisée en ce que** l'enveloppe isolante comporte une seconde bande d'attache positive autrement dénommée « crochet » (13b) qui s'étend sur la première nappe (8,9) le long du bord périphérique adjacent (16) au bord (15) comportant la première bande d'attache positive (13a), et une seconde bande d'attache négative (14b) qui s'étend sur la seconde nappe (9,8) le long du bord périphérique adjacent (18) au bord (17) comportant la première bande d'attache négative (14a).

15. Utilisation de la pièce souple selon l'une quelconque des revendications précédentes pour la protection de chemins de câbles électriques.

## Patentansprüche

1. Flexibles Teil mit feuerhemmenden Eigenschaften, **dadurch gekennzeichnet, dass** es mindestens beinhaltet:
- eine Lage (3, 3a) aus anorganischen und isolierenden faserigen Elementen (2), die die Form eines in seinem auseinandergefalteten Zustand im Wesentlichen planen durchgehenden Teils aufweist,
- ein wässriges Gel (4), das in unmittelbarer Nähe der Lage (3) angeordnet ist, mindestens ein superabsorbierendes Polymer wie etwa Polyacrylamide und Polyamide umfasst und mindestens 80 Gew.-% Wasser umfasst,
- und eine dichte Hülle (6, 7), die mindestens das wässrige Gel (4) von der Umgebung isoliert,
so dass bei einer Exposition gegenüber übermäßigen Temperaturen das wässrige Gel (4) mindestens teilweise in die Faserlage (3) imprägniert wird, um deren Temperaturanstieg zu verzögern.

2. Flexibles Teil nach Anspruch 1, **dadurch gekennzeichnet, dass** die Faserlage (3) mindestens teilweise beschichtet ist und mindestens teilweise mit dem wässrigen Gel (4) imprägniert ist, so dass sie eine gelierte Lage (5, 5a) bildet.

3. Flexibles Teil nach Anspruch 2, **dadurch gekennzeichnet, dass** die dichte Hülle (6, 7) die gelierte Lage (5, 5a) umgibt.

4. Flexibles Teil nach einem der Ansprüche 1 bis 3, **dadurch gekennzeichnet, dass** die dichte Hülle ein dichter Polymerfilm (6) ist, der die durch die Lage oder Lagen (3, 3a) und das wässrige Gel (4) gebildete Anordnung umgibt.

5. Flexibles Teil nach Anspruch 1, **dadurch gekennzeichnet, dass** es mindestens das in einem dichten Polymerfilm (6) enthaltene wässrige Gel (4) beinhaltet, wobei die Anordnung, die durch das so von dem dichten Film (6) umgebene wässrige Gel (4) gebildet wird, in flächigem Kontakt mit mindestens einer Faserlage (3) steht.

6. Flexibles Teil nach einem der vorhergehenden Ansprüche, **dadurch gekennzeichnet, dass** das wässrige Gel (4) und die Faserlage oder -lagen (3) in einer thermisch isolierenden Hülle (7) aufgenommen sind.

7. Flexibles Teil nach Anspruch 6, **dadurch gekennzeichnet, dass** die isolierende Hülle (7) auf Basis von Glasgewebe (11) ausgeführt ist, das auf mindestens einer seiner Seiten mit Silikon (12) beschichtet ist, so dass eine dichte Hülle gebildet wird, und eine obere Lage (8) und eine untere Lage (9) umfasst, die an ihren jeweiligen gegenüberliegenden Umfangsrändern untereinander verbunden sind.

8. Flexibles Teil nach einem der vorhergehenden Ansprüche, **dadurch gekennzeichnet, dass** das wässrige Gel (4) auf Basis eines oder mehrerer Wasser zurückhaltender Polymere ausgeführt ist.

9. Flexibles Teil nach Anspruch 8, **dadurch gekennzeichnet, dass** das wässrige Gel (4) auf Basis eines oder mehrerer superabsorbierender Polymere ausgeführt ist.

10. Flexibles Teil nach Anspruch 8, **dadurch gekennzeichnet, dass** das wässrige Gel (4) auf Basis von Polyacrylamid ausgeführt ist.

11. Flexibles Teil nach einem der vorhergehenden Ansprüche, **dadurch gekennzeichnet, dass** die faserigen Elemente (2) auf Basis von feuerfesten keramischen Fasern ausgeführt sind.

12. Flexibles Teil nach Anspruch 11, **dadurch gekennzeichnet, dass** die feuerfesten keramischen Fasern Fasern aus Erdalkali-Silikaten sind.

13. Flexibles Teil nach einem der Ansprüche 6 bis 12, **dadurch gekennzeichnet, dass** die isolierende Hülle (7) mindestens ein erstes positives Befestigungsband, auch "Hakenband" (13a) genannt, beinhaltet, das sich entlang eines Umfangsrandes (15) einer ersten oberen (8) oder unteren (9) Lage erstreckt, und mindestens ein erstes negatives Befestigungsband, auch "Flauschband" (14a) genannt, das sich entlang des entgegengesetzten Umfangsrandes (17) der zweiten unteren (9) oder oberen (8) Lage erstreckt.

14. Flexibles Teil nach Anspruch 15, **dadurch gekennzeichnet, dass** die isolierende Hülle ein zweites positives Befestigungsband, auch "Hakenband" (13b) genannt, beinhaltet, das sich auf der ersten Lage (8, 9) entlang des zu dem Rand (15), der das erste positive Befestigungsband (13a) beinhaltet, benachbarten Umfangsrandes (16) erstreckt, und ein zweites negatives Befestigungsband (14b), das sich auf der zweiten Lage (9, 8) entlang des zu dem Rand (17), der das erste negative Befestigungsband (14a) beinhaltet, benachbarten Umfangsrand (18) erstreckt.

15. Verwendung des flexiblen Teils nach einem der vorhergehenden Ansprüche zum Schutz von Stromkabelrinnen.

## Claims

1. Flexible part having fire-retardant properties, **characterized in that** it comprises at least:
- a sheet (3, 3a) of inorganic and insulating fibrous elements (2) exhibiting the form of a solid part which is substantially flat in its deployed state,
- an aqueous gel (4) positioned in the immediate proximity of said sheet (3) comprising at least one superabsorbent polymer, such as polyacrylamides and polyamides, and comprising at least 80% by weight of water,
- and a leaktight casing (6, 7) which isolates at least the aqueous gel (4) from the environment,
so that, during exposure to excessive temperatures, the aqueous gel (4) is at least partially impregnated in the sheet of fibres (3) in order to delay the rise in temperature thereof.

2. Flexible part according to Claim 1, **characterized in that** the sheet of fibres (3) is at least partially coated and at least partially impregnated with aqueous gel (4), thus forming a gelled sheet (5, 5a).

3. Flexible part according to Claim 2, **characterized in that** the leaktight casing (6, 7) surrounds the gelled sheet (5, 5a).

4. Flexible part according to any one of Claims 1 to 3, **characterized in that** the leaktight casing is a leaktight polymer film (6) which surrounds the combination formed by the sheet(s) (3, 3a) and the aqueous gel (4).

5. Flexible part according to Claim 1, **characterized in that** it comprises at least the aqueous gel (4) contained in a leaktight polymer film (6), the combination formed by the aqueous gel (4) thus surrounded by the leaktight film (6) being in surface contact with at least a sheet of fibres (3).

6. Flexible part according to any one of the preceding claims, **characterized in that** the aqueous gel (4) and the sheet(s) of fibres (3) are housed in a thermally insulating casing (7).

7. Flexible part according to Claim 6, **characterized in that** the insulating casing (7) is produced based on glass fabric (11) coated with silicone (12) on at least one of its faces, forming a leaktight casing, and comprises an upper sheet (8) and a lower sheet (9) unified with each other at their respective facing peripheral edges.

8. Flexible part according to any one of the preceding claims, **characterized in that** the aqueous gel (4) is produced based on one or more water-retaining polymers.

9. Flexible part according to Claim 8, **characterized in that** the aqueous gel (4) is produced based on one or more superabsorbent polymers.

10. Flexible part according to Claim 8, **characterized in that** the aqueous gel (4) is based on polyacrylamide.

11. Flexible part according to any one of the preceding claims, **characterized in that** the fibrous elements (2) are based on refractory ceramic fibres.

12. Flexible part according to Claim 11, **characterized in that** the refractory ceramic fibres are fibres of alkaline earth metal silicates.

13. Flexible part according to any one of Claims 6 to 12, **characterized in that** the insulating casing (7) comprises at least a first positive attachment strip, otherwise designated "hook" (13a), which extends along a peripheral edge (15) of a first upper sheet (8) or lower sheet (9), and at least a first negative attachment strip, otherwise designated "loop" (14a), which extends along the opposite peripheral edge (17) of the second lower sheet (9) or upper sheet (8).

14. Flexible part according to Claim 15, **characterized in that** the insulating casing comprises a second positive attachment strip, otherwise designated "hook" (13b), which extends over the first sheet (8, 9) along the peripheral edge (16) adjacent to the edge (15) comprising the first positive attachment strip (13a), and a second negative attachment strip (14b) which extends over the second sheet (9, 8) along the peripheral edge (18) adjacent to the edge (17) comprising the first negative attachment strip (14a).

15. Use of the flexible part according to any one of the preceding claims for the protection of electric cable trays.
